**Europäisches Patentamt**

(19) **European Patent Office**

**Office européen des brevets**

(11) Veröffentlichungsnummer: **0 012 384**
**B1**

(12) **EUROPÄISCHE PATENTSCHRIFT**

(45) Veröffentlichungstag der Patentschrift:
**12.01.83**

(21) Anmeldenummer: **79104982.8**

(22) Anmeldetag: **06.12.79**

(51) Int. Cl.³: **F 03 G 7/02**

(54) **Sonnenkraftwerk mit photovoltaischen Zellen.**

(30) Priorität: **18.12.78 DE 2854609**

(43) Veröffentlichungstag der Anmeldung:
**25.06.80 Patentblatt 80/13**

(45) Bekanntmachung des Hinweises auf die Patenterteilung:
**12.01.83 Patentblatt 83/2**

(84) Benannte Vertragsstaaten:
**AT BE CH FR GB IT LU NL**

(56) Entgegenhaltungen:
**DE-A-2 412 908**
**DE-A-2 604 175**
**DE-A-2 654 125**
**DE-A-2 752 178**
**FR-A-2 244 922**
**FR-A-2 304 791**
**US-A-4 002 031**

(73) Patentinhaber: **INTERATOM Internationale Atomreaktorbau GmbH, Friedrich-Ebert-Strasse, D-5060 Bergisch Gladbach 1 (DE)**

(72) Erfinder: **Boese, Friedrich Karl, Dr., Hackberg 14, D-5060 Bergisch-Gladbach 1 (DE)**

(74) Vertreter: **Mehl, Ernst, Dipl.-Ing., Postfach 22 01 76, D-8000 München 22 (DE)**

## Sonnenkraftwerk mit fotovoltaischen Zellen

Die vorliegende Erfindung betrifft ein Sonnenkraftwerk mit den im Oberbegriff des ersten Anspruchs genannten Merkmalen. Bei den lichtkonzentrierenden Mitteln kann es sich um Spiegel oder auch um Fresnellinsen handeln.

Derartige Kraftwerke sind seit langem bekannt, z.B. aus der DE-A-2 654 125; sie begegnen neuerdings erhöhtem Interesse, da die Verwendung von für diesen Zweck neuartigen Kühlmitteln, wie z.B. von flüssigem Natrium oder von Helium und von thermisch widerstandsfähigeren Werkstoffen Betriebstemperaturen ermöglichen, die bei der Erzeugung von Sekundär-, d.h. meist elektrischer Energie (mittels Generatoren, die von Wärmekraftmaschinen angetrieben werden) höhere Wirkungsgrade zulassen. Darüber hinaus sind z.B. aus der US-A-4 002 031 Kraftwerke bekannt, in denen fotoelektrische Zellen mit durch Linsen konzentriertem Sonnenlicht bestrahlt werden. Das Ausmass der Konzentration und damit die je Flächeneinheit gewinnbare Leistung wird auch bei der hier vorgesehenen Kühlung der Zellen dadurch begrenzt, dass diese nur Temperaturen von etwa 200 °C ausgesetzt und so nur im Bereich mittlerer Konzentrationen des Sonnenlichts angeordnet werden dürfen. Die genannte Druckschrift lehrt auch den Gebrauch des erhitzten Kühlfluids zur zusätzlichen Energiegewinnung in einem thermodynamischen Kreisprozess. Aus der DE-A-2 412 908 ist eine Anordnung von fotoelektrischen Zellen um einen Empfänger zur Aufnahme von Wärmestrahlung bekannt, die sich jedoch selbst im Bereich nicht konzentrierten Sonnenlichtes befinden. Die FR-A-2 304 791 zeigt neben einer ähnlichen Kombination von lichtkonzentrierenden Spiegeln und an ihrem Rand angeordneten fotoelektrischen Zellen die Möglichkeit, die in letzteren erzeugte elektrische Energie zumindest teilweise zum Betrieb von Hilfsgeräten in der Anlage selbst zu verwenden, hier für die zum Verschwenken der Spiegel verwendeten Elektromotoren.

Da die Sonne selbst keine punktförmige Lichtquelle darstellt, lassen sich ihre Strahlen mit optischen Mitteln auch nicht auf einen Brenn-«Punkt» konzentrieren, vielmehr entsteht eine Brenn-«Fläche» mit einer gewissen, auch durch die optische Qualität der Spiegel usw. beeinflussten Mindestausdehnung. An den Rändern dieser Fläche ist der Lichteinfall geringer als in deren Mitte; ein Empfänger, der mit seinem Querschnitt die gesamte Fläche abdecken würde, müsste um der Nutzung dieser geringen Lichtmenge willen unverhältnismässig grösser und teurer sein als ein Empfänger, der nur die zentralen Teile des Lichtbündels nutzt (mit ca. 90% der Gesamtenergie); er hätte darüber hinaus eine sehr unterschiedliche Leistungsdichte.

Aufgabe der vorliegenden Erfindung ist die Nutzung dieses bislang am Empfänger ungenügend genutzt vorbeistrahlenden Lichtes bei angemessenem apparativem Aufwand. Ferner ist Aufgabe der Erfindung die Nutzung der so gewonnenen Energie für den Eigenbedarf und für eine verbesserte Regelung des Sonnenkraftwerkes.

Die Lösung der Aufgabe geschieht durch die im 1. Anspruch vorgeschlagene Verwendung von photovoltaischen Zellen. Deren Wirkungsgrad ist bei vorgegebener Temperatur nahezu unabhängig von der Lichtintensität. Berechnungen für ein Versuchskraftwerk von 500 kW elektrischer Leistung zeigen, dass sich so zusätzlich etwa 75 kW, d.h., 15% der Gesamtleistung gewinnen lassen. Da das auf die Fotozellen auftreffende Licht gegenüber dem normalen Sonnenlicht noch um etwa das zehnfache konzentriert ist, betragen die Investitionskosten je Leistungseinheit nur ein Zehntel der sonst (bei Verzicht auf den Einsatz lichtkonzentrierender Mittel) erforderlichen. Ohnehin bereits vorhandene Teile der Anlage (z.B. die Spiegel, der die Zellen wie den Empfänger tragende Turm) können mitbenutzt werden. Daher ergibt sich eine Verbesserung des Kosten/Nutzen-Verhältnisses für die Gesamtanlage.

Die zusätzlich gewonnenen 15% an Leistung entsprechen etwa dem Eigenbedarf der Anlage für die Umwälzung des Kühlfluids.

Der im 2. Anspruch vorgeschlagene Betrieb der Kühlfluidumwälzpumpen mit dem so erzeugten Strom (ggf. unter zusätzlicher Energiezufuhr von aussen) ist geeignet, ein beim Betrieb von Sonnenkraftwerken zwangsläufig auftretendes, bislang nicht gelöstes Problem auszuschalten.

Die in der Zeiteinheit umgewälzte Kühlmenge muss entsprechend der dem Empfänger zugeführten Wärmemenge geregelt werden, um eine möglichst gleichbleibende Temperatur des Kühlfluids zu halten oder wenigstens Thermoschockbelastungen der Anlage durch sich sehr rasch ändernde Temperaturen zu vermeiden. Diese Regelung ist an sich ohne weiteres, z.B. durch Drehzahlsteuerung der Pumpen zu erzielen; sie muss im übrigen nicht nur den tageszeitlichen Schwankungen der eingestrahlten Sonnenenergie folgen, sondern auch u.U. sehr schnellen Schwankungen, hervorgerufen durch einzelne, die Sonne vorübergehend verdeckende Wolken. Hier besteht nun die Gefahr, dass bei einem Ausfall der herkömmlichen Regelung und unverminderter Umwälzgeschwindigkeit des Kühlfluids durch Thermoschock Schäden an der Anlage hervorgerufen werden. Wird nun, wie vorgeschlagen, die Kühlfluidpumpe mit elektrischer Energie betrieben, die in den den gleichen Schwankungen in der Sonneneinstrahlung ausgesetzten fotovoltaischen Zellen erzeugt wird, ergibt sich eine inhärent sichere Anpassung der Pumpenförderleistung an die jeweiligen Bedingungen.

Die fotovoltaischen Zellen (zur Erzielung höherer Spannungen in bekannter Weise in Serie geschaltet) erzeugen Gleichstrom; dieser kann, wie im 3. Anspruch vorgeschlagen, unmittelbar zur Versorgung einer Induktionspumpe verwendet werden, die sich besonders für den Betrieb mit Flüssigmetallen, wie Natrium oder mit Salzschmelzen eignet; die Pumpe weist keine bewegten Teile auf, und das das Kühlfluid führende System kann völlig abgedichtet sein.

Liegt die zulässige Betriebstemperatur der fotovoltaischen Zellen über der Eintrittstemperatur des Kühlfluids in den Empfänger, kann durch eine Schaltung, wie sie im 4. Anspruch vorgeschlagen wird, der für die Kühlung der Zellen erforderliche zusätzliche Aufwand auf ein Mindestmass beschränkt werden.

Sonst kann entsprechend der im 5. Anspruch aufgezeigten Alternative die Kühlung der fotovoltaischen Zellen durch ein Hilfsfluid geschehen, z.B. durch das Speisewasser eines Dampferzeugers, der durch das Kühlfluid des Empfängers beheizt wird. Selbstverständlich ist auch ein besonderer Kühlkreislauf möglich, um bei hoher Konzentration des Sonnenlichts die Temperatur der Zellen auf der mit Rücksicht auf Wirkungsgrad und Kosten optimalen Höhe zu halten.

Ein Ausführungsbeispiel der Erfindung ist in der Zeichnung dargestellt, und zwar zeigt

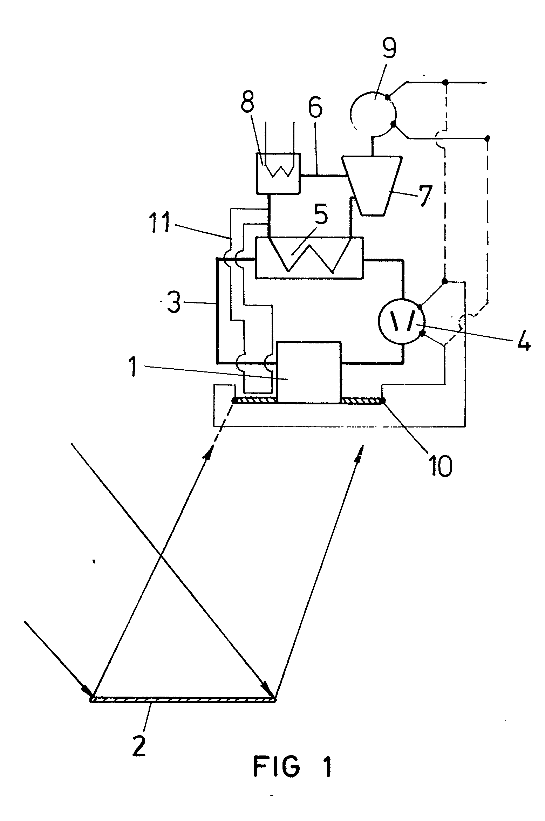

Fig. 1 ein Schaltbild der Anlage,

Fig. 2 die Vorderansicht des Empfängers,

Fig. 3 einen waagerechten Querschnitt durch denselben entlang der Linie I–II der Fig. 2 und

Fig. 4 einen Axial-Längsschnitt entsprechend der Linie III–IV der Fig. 2.

Das durch Pfeile angedeutete Sonnenlicht wird durch eine Vielzahl von Spiegeln 2 gebündelt und auf einen Empfänger 1 gerichtet; der Übersichtlichkeit halber ist nur ein Spiegel 2 dargestellt. Die Spiegel werden mit Hilfe an sich bekannter Vorrichtungen entsprechend dem jeweiligen Sonnenstand so ausgerichtet, dass die Mitte des Strahlenbündels, in der die Konzentration des Sonnenlichts am stärksten ist, auf den Empfänger trifft. In dem Empfänger 1 wird ein Kühlfluid, beispielsweise flüssiges Natrium erhitzt und, durch eine Pumpe 4 in Bewegung versetzt, einem Wärmetauscher 5 zugeführt, in dem das Kühlfluid seine Wärme an einen Wasser-/Dampfkreislauf 6 abgibt. Mit dem in dem Wärmetauscher 5 erzeugten Dampf wird eine Turbine 7 angetrieben, die ihrerseits einen Generator 9 antreibt, der einen hier nicht gezeigten Verbraucher mit elektrischem Strom versorgt. Der in der Turbine 7 entspannte Dampf wird in einem Kondensator 8 verflüssigt und als Speisewasser erneut dem Dampferzeuger 5 zugeführt. Diese dem Stande der Technik entsprechende Anlage nutzt das durch die Spiegel 2 konzentrierte Sonnenlicht nicht vollständig aus. Um auch das schwächer konzentrierte Licht an den Rändern des Strahlenbündels zu nutzen, sind gemäss der Erfindung um den Empfänger 1 herum Photozellen 10 angeordnet, mit denen der Querschnitt des Strahlenbündels im wesentlichen abgedeckt ist. Mit dem in den Fotozellen 10 erzeugten Gleichstrom wird die Pumpe 4 betrieben, die eine Induktionspumpe ist. Zumindest wird die Pumpe mit diesem Strom geregelt, während ein Teil des Strombedarfes über die gestrichelt gezeichneten Leitungen vom Generator 9 gedeckt wird. Für die notwendige Kühlung der Fotozellen sorgt ein Kühlkreislauf 11, der vom Wasser-/ Dampfkreislauf 6 unmittelbar vor dessen Eintritt in den Wärmetauscher 5 abgezweigt sein kann.

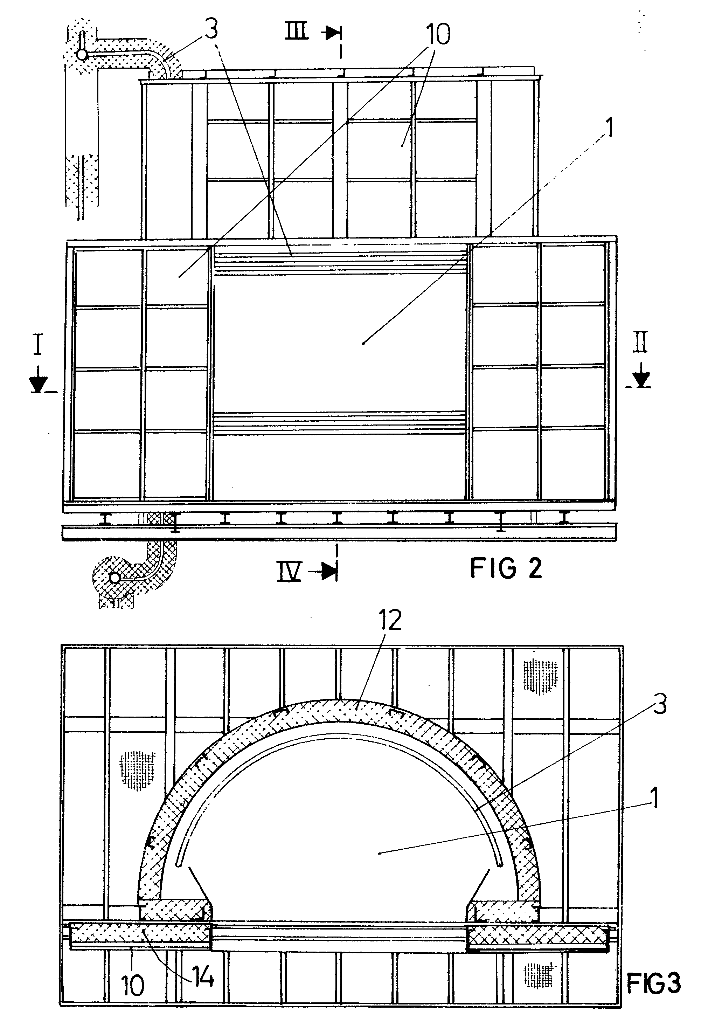

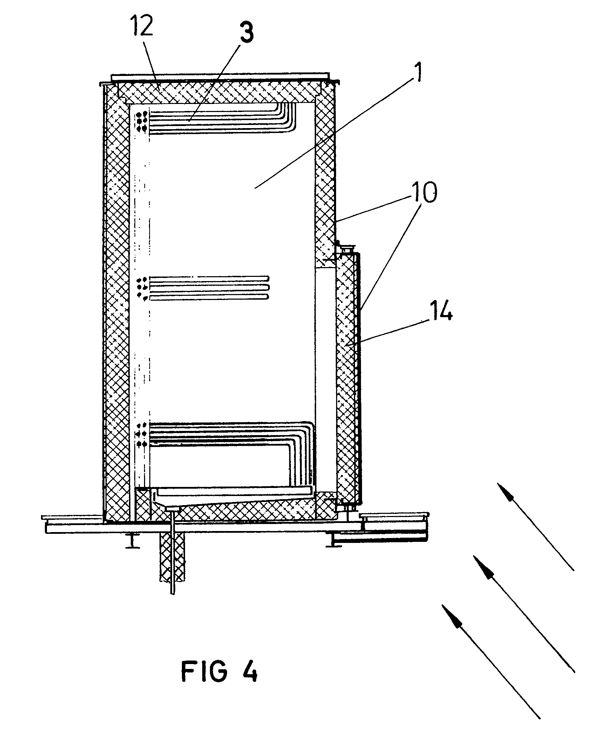

Der Empfänger 1 besteht (siehe Fig. 2–4) aus einer nach vorne zu offenen halbzylindrischen Höhlung, die an ihrer Rückseite mit einer Isolierung 12 versehen ist. Nahe der Rückwand ist eine grössere Anzahl von kreisbogenförmig gebogenen, mäanderförmig verlaufenden und zum Teil parallel geschalteten Rohren des Kreislaufs 3 angeordnet, in denen das Kühlfluid durch die konzentrierte Sonnenstrahlung erhitzt wird. Um ein zu starkes Auskühlen des Kreislaufs 3 während der Nacht oder bei sonst ungenügender Sonneneinstrahlung zu vermeiden, die beispielsweise zu einem Einfrieren des als Kühlfluid verwendeten Natriums führen könnte, ist die Höhlung des Empfängers 1 durch ebenfalls mit einer Isolierung versehene Schiebetüren 14 (in Fig. 2 und 3 offen, in Fig. 4 geschlossen gezeichnet) verschlossen. Die Oberfläche dieser Schiebetüren 14 und auch andere geeignete Flächen, hier z.B. der obere Teil des Empfängers 1 sind mit Fotozellen bekannter Art belegt, die auf hier nicht gezeigte, dem Fachmann aber geläufige Art und Weise in Serie und/oder parallel geschaltet sind. Üblicherweise ist der Empfänger 1 auf der Spitze eines hier nicht gezeigten Turmes angeordnet, so dass sich die in der Fig. 4 durch Pfeile angedeutete Richtung der Sonnenstrahlen ergibt, die von den am Erdboden angeordneten Spiegeln reflektiert wurden.

### Patentansprüche

1. Sonnenkraftwerk mit einer Vielzahl von lichtkonzentrierenden, auf einen Empfänger (1) gerichteten Mitteln (2); in dem Empfänger wird ein Kühlfluid erhitzt, mit dem direkt oder indirekt Arbeitsmaschinen (7) betrieben werden; das Kraftwerk ist dadurch gekennzeichnet, dass um den Empfänger (1) herum im Bereich des konzentriert einfallenden Sonnenlichts fotovoltaische Zellen (10) angeordnet sind.

2. Kraftwerk nach Anspruch 1 mit einer Kühlfluid umwälzenden Pumpe, dadurch gekennzeichnet, dass die Pumpe (4) ganz oder teilweise mit der in den fotovoltaischen Zellen (10) erzeugten elektrischen Energie betrieben wird.

3. Pumpe nach Anspruch 2 für elektrisch leitendes Kühlfluid dadurch gekennzeichnet, dass die Pumpe (4) eine Induktionspumpe ist.

4. Kraftwerk nach Anspruch 1, dadurch gekennzeichnet, dass eine Kühlung der fotovoltaischen Zellen (10) im Kreislauf (3) des Kühlfluids vor dessen Eintritt in den Empfänger erfolgt.

5. Kraftwerk nach Anspruch 1, dadurch gekennzeichnet, dass eine Kühlung der fotovoltaischen Zellen (10) im Kreislauf (6) eines durch das Kühlfluid erhitzten Hilfsfluids erfolgt.

### Claims

1. A solar power station comprising a plurality of light-concentrating means (2) directed onto a receiver (1), in which receiver a cooling fluid is heated with which machines (7) are directly or indirectly operated; the power station is characterised in that photo-voltaic cells (10) are arranged around the receiver (1) in the region of the concentrated incident sunlight.

2. A power station according to claim 1 having a pump which circulates cooling fluid, characterised in that the pump (4) is completely or partially operated by the electrical energy which is generated in the photo-voltaic cells (10).

3. A pump according to claim 2 for electrically-conductive cooling fluid, characterised in that the pump (4) is an induction pump.

4. A power station according to claim 1, characterised in that a cooling of the photo-voltaic cells (10) is effected in the cooling fluid cycle (3) prior to the introduction of the cooling fluid into the receiver.

5. A power station according to claim 1, characterised in that a cooling of the photo-voltaic cells (10) is effected in an auxiliary fluid cycle (6) which auxiliary fluid is heated by means of the cooling fluid.

## Revendications

1. Centrale solaire comportant plusieurs moyens (2) concentrateurs de lumière dirigés vers un récepteur (1); dans le récepteur est réchauffé un fluide de refroidissement avec lequel des machines productrices de travail (7) sont entraînées directement ou indirectement, la centrale est caractérisée en ce que des cellules photovoltaïques (10) sont disposées autour du récepteur (1) dans la région de la lumière solaire arrivant de façon concentrée.

2. Centrale suivant la revendication 1 comportant une pompe faisant circuler un fluide de refroidissement, caractérisée en ce que la pompe (4) est entraînée totalement ou partiellement par l'énergie électrique produite dans les cellules photovoltaïques (10).

3. Pompe suivant la revendication 2 pour un fluide de refroidissement conducteur du point de vue électrique, caractérisée en ce que la pompe (4) est une pompe à induction.

4. Centrale suivant la revendication 1, caractérisée en ce qu'un refroidissement des cellules photovoltaïques (10) a lieu dans le circuit (3) du fluide de refroidissement avant son entrée dans le récepteur.

5. Centrale suivant la revendication 1, caractérisée en ce qu'un refroidissement des cellules photovoltaïques (10) a lieu dans le circuit (6) d'un fluide auxiliaire réchauffé par le fluide de refroidissement.

FIG 1

FIG 2

FIG3

FIG 4